(19) Europäisches Patentamt
European Patent Office
Office européen des brevets

(11) **EP 0 816 290 B1**

(12) **EUROPÄISCHE PATENTSCHRIFT**

(45) Veröffentlichungstag und Bekanntmachung des Hinweises auf die Patenterteilung:
**20.10.1999 Patentblatt 1999/42**

(51) Int. Cl.$^6$: **C01B 31/18**, C01B 3/36

(21) Anmeldenummer: 97109458.6

(22) Anmeldetag: **11.06.1997**

(54) **Verfahren zur Gewinnung von Kohlenmonoxid und Wasserstoff**

Process for the production of carbon monoxide and hydrogen

Procédé d'obtention d'oxide de carbone et d'hydrogène

(84) Benannte Vertragsstaaten:
**BE ES FR GB IT NL PT**

(30) Priorität: **24.06.1996 DE 19625093**

(43) Veröffentlichungstag der Anmeldung:
**07.01.1998 Patentblatt 1998/02**

(73) Patentinhaber: **BAYER AG**
**51368 Leverkusen (DE)**

(72) Erfinder:
• **Dummersdorf, Hans-Ulrich, Dr.**
**51399 Burscheid (DE)**
• **Müller, Hans-Jürgen, Dr.**
**51375 Leverkusen (DE)**
• **Grenner, Dieter, Dr.**
**51373 Leverkusen (DE)**
• **Moormann, Gerhard**
**25541 Brunsbüttel (DE)**

(56) Entgegenhaltungen:
EP-A- 0 289 877            EP-A- 0 307 843
EP-A- 0 476 656            EP-A- 0 583 981
EP-A- 0 595 100

• PATENT ABSTRACTS OF JAPAN vol. 16, no. 29 (C-0904), 24.Januar 1992 & JP 03 242302 A (MITSUBISHI KAKOKI KAISHA LTD), 29.Oktober 1991,

**Beschreibung**

Die Erfindung geht aus von einem Verfahren zur gleichzeitigen Gewinnung von reinem Kohlenmonoxid und Wasserstoff durch Weiterverarbeitung eines aus den Gaskomponenten $H_2$, $H_2O$-Dampf, $CH_4$, $CO_2$, CO und gegebenenfalls $N_2$ bestehenden Synthesegasstromes. Das Rein-CO soll dabei insbesondere als Synthesegrundstoff für die Isocyanatherstellung, Essigsäure- oder Methylmethacrylatherstellung zum Einsatz kommen.

Es gibt eine Vielzahl von Verfahren, die aus fossilen Rohstoffen Synthesegase (CO/$H_2$-Gemische) unterschiedlicher Zusammensetzung, z.B. für die Methanol-oder Ammoniaksynthese erzeugen. Wird als Rohstoff Erdgas eingesetzt, ist das gebräuchlichste Verfahren das Steam-Reforming. Dieses Verfahren wird mit besonders großen Kapazitäten als Synthesegaslieferant für Ammoniakanlagen verwendet. Ammoniakanlagen, die auf der Basis von Erdgas arbeiten, stellen weltweit die überwiegenden Ammoniakkapazitäten bereit. Die eigentliche Ammoniakhochdrucksynthese erfordert als Eduktgas (feed) ein nahezu stöchiometrisch eingestelltes $N_2$/$H_2$ Gemisch (1:3). In der Regel ist die Ammoniaksyntheseanlage eng stofflich und energetisch mit dem vorgeschalteten Steamreformer verkoppelt, dessen Aufgabe es ist, ausschließlich ein wasserstoffreiches Synthesegas mit entsprechendem stöchiometrischen Stickstoffgehalt herzustellen. Auf dieses Ziel ist der ganze Prozeß ausgerichtet. Die durch den Erdgaseinsatz zwangsläufig in verschiedenen Verfahrensstufen des Reformers vorliegenden Kohlenoxide (CO, $CO_2$), stellen eigentlich unerwünschte Begleitkomponenten im Sinne des Prozeßzieles dar. Man behilft sich deshalb in der Form, daß man durch Hochtemperatur-und Tieftemperaturkonvertierung des nach dem Reformingprozeß im Rohsynthesegas vorliegendem CO dieses katalytisch an Ni-Katalysatoren mit Wasserdampf zu $H_2$ umsetzt und damit im Sinne des Prozeßzieles CO letztlich zu Wasserstoff bzw. zu Ammoniak verwertet. Das dabei zwangsläufig anfallende $CO_2$ ist ein energiearmes (minderwertiges) Nebenprodukt. Oft kann dieses $CO_2$ partiell als Verkaufsprodukt mit allerdings geringer Wertschöpfung bei einem i.d.R. regional begrenztem Markt, z.B. für die Getränkeindustrie genutzt werden. Günstig ist die Situation an solchen Standorten von Ammoniaksyntheseanlagen, wo gleichzeitig Harnstoffsyntheseanlagen betrieben werden, die $CO_2$ als Rohstoff nutzen. In aller Regel allerdings werden an den meisten Standorten von Ammoniakanlagen größere Anteile des $CO_2$ als Überschuß in die Atmosphäre abgegeben und erhöhen so die Umweltbelastung. Aufgrund von nur in großen Tonnagen wirtschaftlich betreibbaren Ammoniakanlagen handelt es sich dabei je nach Anlage in der Regel um außerordentlich große emittierte $CO_2$-Mengen.

In Ammoniaksteamreformern wird im Gegensatz zu anderen Synthesegaserzeugungsverfahren auf Basis Erdgas die direkte Befeuerung des Sekundärreformers mit Verbrennungsluft durchgeführt, wobei der in der Verbrennungsluft enthaltene Stickstoff gleichzeitig die Synthesekomponente für die Ammoniaksynthese in das zu produzierende Synthesegas einbringt

In der chemischen Industrie wird andererseits zur Herstellung von Essigsäure, Methylmethacrylaten und Isocyanaten etc. reines CO benötigt, welches bestimmte Spezifikationen hinsichtlich des Gehaltes an Kohlenwasserstoffen und Wasserstoff erfüllen muß.

Für die Herstellung von CO gibt es eine Vielzahl von bekannten Verfahren, die in ihrer Grundstruktur aus wirtschaftlichen Gründen zumeist speziell auf die alleinige CO-Erzeugung ausgerichtet sind. So können beispielsweise Reformer eingesetzt werden, die speziell bereits in der Reformerstufe durch ein höher eingestelltes CO/$H_2$-Verhältnis auf die gewünschte CO-Gewinnung hinarbeiten, z.B. die Partialoxidation von Erdgas mit Sauerstoff. Bei der Partialoxidation von Erdgas wird der Wasserstoffeintrag ins Synthesegas durch Nichtverwendung von Dampf gegenüber dem Ammoniaksteamreformer reduziert. Ein derartiges Verfahren wird in [1] beschrieben.

Dabei wird Erdgas durch Partialoxidation mit Sauerstoff in ein relativ CO-reiches CO/$H_2$/$CO_2$/Wasserdampf-Gemisch umgewandelt, welches nachfolgend in einer Adsorberstation von $CO_2$ und Wasserdampf befreit wird. Die geforderte Wasserstoffreinheit beträgt 98%. Das im Wasserstoff enthaltene CO wird in zwei Stufen durch Anwendung tiefer Temperaturen auskondensiert. Die Gastrennung könnte alternativ auch mittels Membrantechnologie oder PSA-Technologie (= Druckwechseladsorption) durchgeführt werden. Wichtig ist, daß in der beschriebenen Technologie kein Stickstoff im aufzutrennenden Synthesegas vorhanden ist, da diese sonst nicht angewandt werden kann.

Ein weiteres in [1] beschriebenes Verfahren arbeitet mit einem $CO_2$-Reformer; d.h. das Erdgas wird statt mit Wasserdampf mit $CO_2$ umgesetzt, wobei ein kohlenstoffreicheres (CO-reicheres) Synthesegas entsteht.

Es wird bei solchen Prozessen auch durch Rückführung von $CO_2$ aus den stromabwärts nachgeschalteten Prozeßstufen in den Partialoxidationsreaktor der Kohlenstoffanteil bzw. CO-Anteil im Partialoxidationsreaktorprodukt im Hinblick auf ein für die nachfolgende Gastrennung möglichst CO-reiches Produkt erhöht.

Abhängig vom Bedarf an Wasserstoff neben dem zu produzierenden CO an dem jeweiligen Standort kann nach den beschriebenen Technologien das Wasserstoff/CO-Verhältnis im Synthesegas in bestimmten Grenzen eingestellt werden. Jedoch fällt zwangsläufig bei der CO-Herstellung immer Wasserstoff an, der oftmals ebenfalls in die Atmosphäre abgegeben werden muß, bzw. nur als Brenngas benutzt und nicht stofflich genutzt werden kann. Will man neben dem Rein-CO auch Rein-Wasserstoff gewinnen, so ist aus physikalischen Gründen die weitere Nachschaltung einer $H_2$-Reinigung, z.B. mit Hilfe einer PSA-Anlage, notwendig.

In [2] werden alternative, weitere Verfahren zum Steam-Reforming mit dem Ziel der $H_2$/CO-Produktion beschrieben, das Steam-Methane Reforming (SMR) gegebenenfalls kombiniert mit einer Sauerstoff Sekundärreformerstufe (Oxygen Secondary Reforming (SMR/O2R)), das autothermische Reforming (ATR) und die thermische partielle Oxidation (POX). Die genannten Verfahren unterscheiden sich in der Eduktgasart und im Einsatz eines Katalysators oder Nichtbedarf eines Katalysators, wie bei der POX, die ohne Katalysator arbeitet. Allen ist gemeinsam, daß sie sowohl Wasserstoff als auch CO in Form einer Mischung oder getrennt erzeugen können, sofern entsprechende Gastrennverfahren nachgeschaltet sind. Der Nachteil aller dieser Verfahren im Hinblick auf eine gewünschte alleinige Rein-CO-Erzeugung besteht allerdings darin, daß neben dem Erfordernis einer separaten ein- oder mehrstufigen Reformerstufe nur ein bestimmtes CO/$H_2$-Verhältnis eingestellt werden kann, d.h. bei der an sich alleinig gewünschten Produktion von CO stets eine wie auch immer geartete Reaktion zu Wasserstoff zwangsläufig erfolgt.

Das prozeßbedingte erzielbare $H_2$/CO-Verhältnis beträgt für die oben angegebenen Verfahren : SMR:3 - 5; SMR/O2R: 2,5 - 4; ATR: 1,6 -2,65; POX: 1,6 -1,8. Bei einer nachfolgenden Gastrennung in Richtung CO als gewünschtes Produkt fällt stets eine wasserstoffreiche Fraktion meist noch minderer Qualität mit an. Ein weiterer Nachteil der Verfahren mit bezüglich der CO-Erzeugung an sich günstigen $H_2$/CO-Verhältnissen im Synthesegas besteht darin, daß teurer Sauerstoff als Oxidationsmittel eingesetzt werden muß. Beim POX mit dem im Hinblick auf die CO-Erzeugung günstigsten $H_2$/CO-Verhältnis entsteht als zusätzlicher Nachteil, daß Ruß aufgrund der hohen Partialoxidationstemperaturen des Gemisches Erdgas/Sauerstoff produziert wird, der die Kohlenstoffausbeute, bezogen auf Einsatzerdgas, schmälert.

In Richtung CO verschoben werden kann das CO/$H_2$-Verhältnis des Synthesegases aus der Reformeranlage noch dadurch, daß $CO_2$ aus der Anlage in den Reformer rezykliert oder Fremd-$CO_2$ im Reformer eingesetzt wird. Jedoch bleibt infolge des Reaktionsgleichgewichtes im Reformer stets eine an sich unerwünschte, wasserstoffreiche Fremdfraktion übrig, die den stofflichen Nutzungsgrad des Einsatzstoffes Erdgas reduziert.

In [3] wird ein Verfahren zur Gastrennung eines aus einem Reformer stammenden Synthesegases beschrieben, bei dem die beiden Zielkomponenten CO und $H_2$ durch semipermeable Membranen, sowie eine PSA-Anlage aufgetrennt werden. Es wird dabei ein Wasserstofffraktion von 99 Mol-% Wasserstoff erzeugt. Der gleichzeitig erzeugte CO-Strom hat eine Reinheit von nur 85 Mol-%.

Das Verfahren bat den Nachteil, daß die CO-Reinheit für viele chemische Prozesse (z.B. für die Produktion von Isocyanaten) nicht ausreichend ist, so daß eine weitere Aufarbeitung für die CO-Fraktion nachgeschaltet werden müßte. Des weiteren ist CO nie als alleiniges Produkt zu erzeugen.

In [4] wird ein Verfahren zur Produktion von Kohlenmonoxid beschrieben, bei dem die Rückführung von $CO_2$ und $H_2$ in eine wärmeintegrierte, umgekehrte Wassergaskonvertierungsreaktion erfolgt, in welcher zusätzliches Kohlenmonoxid erzeugt wird.

[5] beschreibt ein CO-Erzeugungsverfahren, bei dem eine höher aufkonzentrierte CO-Fraktion aus einem Reformer als Vorlage für eine effektivere Gastrennung erzeugt wird. Der Reformer besteht aus einem Primär- und einem Sekundärreformer. Importiertes und recyceltes $CO_2$ werden mit dem Kohlenwasserstoffedukt in den Primärreformer gefahren. Dieses primäre Reaktionsprodukt wird dann gemeinsam mit Sauerstoff in einen sekundären Reformer eingespeist, wobei in einer autothermen sekundären Reaktion eine Kohlenmonoxid-Fraktion erzeugt wird. Diese Fraktion hat eine niedrigere Kohlenwasserstoffkonzentration als die aus dem Primärreformer kommende. Das aus dem Sekundärreformer zurückgeführte Gas hat einen hohen CO-Anteil, so daß die nachfolgende Tieftemperatur-Gaszerlegung mit geringerem Aufwand eine hochreine CO-Fraktion erzeugen kann.

Solcherart Eingriffe, insbesondere das Recycling von $CO_2$ in eine Klassische Ammoniakanlage, laufen dem primären Ziel der Erzeugung einer wasserstoffreichen Synthesegasfraktion zuwider und stellen den sinnvollen Betrieb von Ammoniakanlagen in Frage. Alle beschriebenen Verfahren greifen in irgendeiner Form in den Reformerbetrieb ein, so daß dessen ungestörter Weiterbetrieb unter den ursprünglichen Betriebsbedingungen nicht mehr möglich ist.

In [6] wird ein alternatives Ammoniakerzeugungskonzept beschrieben, welches im Gegensatz zu klassischen Ammoniakanlagen insbesondere auf einen direkt mit Erdgas und Verbrennungsluft befeuerten Sekundärreformer verzichtet und den erforderlichen Stickstoff separat in einer Luftzerlegungsanlage herstellt, der dann in die voll zur Erzeugung von Wasserstoff betriebene Reformeranlage zur Ammoniaksynthese zugemischt wird. Eine Erzeugung von CO oder gar Rein-CO ist bei diesem neuen Ammoniakkonzept nicht vorgesehen.

[7] beschreibt ein Verfahren zur Erzeugung eines hochreinen Wasserstoff-und eines hochreinen CO-Stromes aus einem aus einem Steamreformer stammenden Synthesegases.

Kern dieses Verfahrens ist die Erzeugung einer hochreinen Wasserstoff-Fraktion in einer dem Steamreformer nachgeschalteten PSA-Anlage, wobei der Abgasstrom der PSA-Anlage weiterverdichtet und einer mehrstufigen Membrantrennanlage zugeführt wird, wo ein reiner CO-Gasstrom erhalten wird.

Nachteile des Verfahrens sind darin zu sehen, daß der zu verarbeitende Synthesegasstrom keinen Stickstoff (wie in Ammoniakanlagen) enthalten darf. Ein weiterer entscheidender Nachteil im Hinblick auf die Erzeugung von hochreinem CO besteht darin, daß das die Membrantrennanlage verlassende Rein-CO nahezu das gesamte Methan enthält, was z.B. für die Isocyanat-Produktion nicht tolerierbar ist. Um ein solches Gas, z.B. für die Isocyanat-Produktion einzusetzen, ist es erforderlich, daß ein weiterer aufwendiger Reinigungsschritt nachgeschaltet wird (z.B. ein zusätzlicher Reformerschritt) um die $CH_4$-Konzentration im CO auf die geforderten Spezifikationswerte von <50 ppm $CH_4$-Gehalt abzusenken. Des weiteren benötigt dieses Verfahren wie alle anderen beschriebenen Verfahren ebenfalls einen separaten Reformer für die CO-Produktion und produziert eine Wasserstoff-Fraktion, für die eine Verwendung gefunden werden muß, wenn das Prozeßziel nur in der CO-Erzeugung besteht.

Weiterhin sind zur Herstellung von reinem CO Koksvergasungsanlagen bekannt, die durch Vergasung von Koks mit $CO_2$ und Sauerstoff ein sehr reines, praktisch wasserstofffreies, methanarmes CO erzeugen können. Diese Verfahren haben allerdings den Nachteil, daß es sich um eine alte überholte Technik mit umfangreichem Feststoffhandling, hohen Kosten, sowie manuellem Arbeitseinsatz bei nicht unbeträchtlichen Arbeitserschwernissen handelt. Des weiteren muß für die Vergasung Sauerstoff eingesetzt werden.

Allen Verfahren der Rein-CO-Gewinnung durch Reforming, Partialoxidation mit anschließender Gaszerlegung (durch PSA, TT-Zerlegung, Adsorption etc.) ist gemeinsam, daß der primäre Prozeß speziell auf die Bedürfnisse der CO-Erzeugung ausgerichtet ist und eine separate Reformeranlage für die CO-Gewinnung erforderlich ist und außerdem nur geringe Stickstoffgehalte, die aus dem Erdgas stammen, zulässig sind.

Es ist ein unter dem Blickwinkel des alleinigen CO-Bedarfes ein nicht zu unterbindender Zwangsanfall von in der Regel weniger reinem Wasserstoff vorhanden, der in den meisten Fällen nur energetisch genutzt werden kann oder sogar in die Atmosphäre abgegeben werden muß. Die meisten Chemiestandorte verfügen aber bereits über NaCl- oder HCl-Elektrolysen, die ausreichend Hydrierwasserstoff in hoher Qualität liefern. Ein weiterer Nachteil der beschriebenen Verfahren besteht darin, daß die Erzeugung von Rein-CO mit Hilfe einer Gastrennung ohne Installation zusätzlicher Feinreinigungsstufen zu Lasten der Reinheit des abgetrennten Wasserstoffes geht, so daß Rein-CO und Reinwasserstoff bei einer solchen Gastrennung nach dem Stand der Technik nicht oder nur mit großem Aufwand parallel erzeugt werden können.

Es stellte sich daher die Aufgabe, ein Verfahren zur gleichzeitigen getrennten Gewinnung von reinem Kohlenmonoxid (d.h. ohne den Zwangsanfall von beigemischten Wasserstoffanteilen!) und Wasserstoff zu entwickeln, welches mit niedrigen Investitions- und Betriebskosten auskommt, einen äußerst geringen Rohstoffeinsatz bei einem hohen stofflichen Nutzungsgrad des eingesetzten Erdgases, bezogen auf beide Zielprodukte CO und Wasserstoff, aufweist und die Umwelt im Vergleich zu bekannten Verfahren erheblich entlastet. Das Verfahren muß weiterhin in die Grundstoffbilanz typischer Chemiestandorte passen.

Diese Aufgabe wird erfindungsgemäß dadurch gelöst,

a) daß in einer Steamreformer-Anlage zur Erzeugung von Wasserstoff oder Ammoniak mit einem Primärreformer, einem Sekundärreformer und einer darauf folgenden CO-Konvertierungsstufe zwischen Sekundärreformer und CO-Konvertierungsstufe ein Teilgasstrom des aus dem Sekundärreformer austretenden Synthesegasstromes mit einem CO-Gehalt zwischen 2 und 20 Mol %, vorzugsweise zwischen 5 und 10 Mol % mit einer Temperatur von 200-500°C und einem Druck im Bereich von 15 bis 50 bar entnommen wird,

b) daß dieser Teilgasstrom auf eine Temperatur unter 100°C abgekühlt und dabei der im Gasstrom enthaltene Wasserdampf überwiegend auskondensiert wird,

c) daß das verbleibende Rohsynthesegas anschließend über eine mehrstufige Gastrennanlage geführt wird, in der die Gaskomponenten $H_2$, Rest-$H_2O$, $CH_4$, $CO_2$ und gegebenenfalls $N_2$ einzeln oder gemeinsam vom CO abgetrennt werden

d) daß die vom CO abgetrennten Gaskomponenten $H_2$, $CH_4$ und gegebenenfalls $N_2$ auf einen Druck komprimiert werden, der oberhalb des Drucks in der CO-Konvertierungsstufe des Steamreformers liegt und zu einem Mischgasstrom wiedervereinigt werden,

e) daß dieser Mischgasstrom nach Aufheizung auf eine Temperatur von 200°C-500°C der CO-Konvertierungsstufe des Steamreformers wieder zugeführt wird,

f) und daß die verbleibende reine CO-Fraktion separat entnommen und gegebenenfalls einer Weiterverarbeitung zugeführt wird.

Unter "Steamreformer" wird in diesem Zusammenhang eine Anlage zur Erzeugung von Ammoniaksynthesegas oder Wasserstoff verstanden, die zumindest einen Primärreformer, einen Sekundärreformer und eine CO-Konvertierungsstufe umfaßt.

Bei dem erfindungsgemäßen Verfahren wird also der $CH_4$-Reformer einer Ammoniakanlage oder einer hauptsächlich auf die Gewinnung von Wasserstoff ausgerichteten anderen Steamreformeranlage für die CO-Gewinnung mitgenutzt, so daß in der Steamreformeranlage eine simultane CO- und Wasserstofferzeugung durchgeführt wird, ohne den Prozeß der Ammoniak- oder Wasserstofferzeugung zu beeinträchtigen und für die Rein-CO-Gewinnung kein separater Reformer oder eine andere Anlage neu errichtet und eingesetzt werden muß.

Das erfindungsgemäße Verfahren umfaßt die folgenden näher definierten Prozeßschritte:

a) Der unter 100°C abgekühlte Teilgasstrom wird einer $CO_2$ -Abtrennungsstufe zugeführt.

b) Der von $CO_2$ befreite Teilgasstrom wird durch eine Wasserstoff-Abscheidungsstufe geleitet, in der eine oder mehrere wasserstoffreiche Gasfraktionen abgetrennt werden.

c) Der nach der Wasserstoff-Abscheidungsstufe verbleibende Teilgasstrom wird anschließend von $CO_2$ - und Wasserspuren gereinigt.

d) Der von $CO_2$- und Wasserspuren befreite Teilgasstrom wird in einer CO-Abscheidestufe in einen reinen CO-Produktgasstrom und ein Methan-Stickstoff Restgasgemisch aufgetrennt.

e) Die wasserstoffreichen Gasfraktionen und das Stickstoff-Methan Restgasgemisch werden getrennt oder gemeinsam auf einen Druck verdichtet, der oberhalb des Drucks in der CO-Konvertierungsstufe des Steamreformers liegt und zu einem wasserfreien und CO-armen Mischgasstrom vereinigt.

f) Dieser Mischgasstrom wird auf eine Temperatur von 200°C-500°C aufgeheizt und in die CO-Konvertierungsstufe der Steamreformer-Anlage eingespeist.

Die Aufheizung des Mischgasstroms auf Temperaturen von 200°C-500°C erfolgt dabei zweckmäßig in einem Gegenstromwärmetauscher, der gleichzeitig zur Kühlung des zwischen Sekundärreformer und CO-Konvertierungsstufe entnommenen Teilgasstroms auf Temperaturen unter 100°C verwendet wird.

Zur Abscheidung des $CO_2$ aus dem unter 100°C abgekühlten Teilgasstrom wird das $CO_2$ in der $CO_2$-Abtrennungsstufe vorteilhaft durch eine Pottaschelösung ausgewaschen oder durch eine selektive $CO_2$-Wäsche mit Aminen als Selektiv-Lösungsmittel entfernt.

Als Wasserstoff-Abscheidungsstufe zur Abtrennung der wasserstoffreiche(n) Gasfraktionen aus dem $CO_2$-freien Teilstrom kann eine (bekannte) PSA-Anlage (Druckwechsel-Adsorptionsanlage) eingesetzt werden.

Die Auftrennung des verbleibenden Teilstroms in einen reinen CO-Produktgasstrom und ein Stickstoff-Methan Restgasgemisch erfolgt in vorteilhafter Weise in der CO-Abscheidestufe durch eine Tieftemperaturrektifikation.

Hinsichtlich der Abzweigung des Teilgasstromes zwischen dem Sekundärreformer und der CO-Konvertierungsstufe wird das erfindungsgemäße Verfahren bevorzugt so durchgeführt, daß das Verhältnis von dem stromabwärts des Sekundärreformers weitergeführten Hauptgasmengenstrom und dem abgezweigten Teilmengenstrom zwischen 1:1 und 4:1 liegt.

Da bei dem erfindungsgemäßen Verfahren ein Teil des CO vor der Konvertierung abgezweigt und ausgeschleust wird, resultiert daraus ein Wasserstoffverlust in den Shift-Reaktoren der CO-Konvertierungsstufe, da dort weniger CO für die Umsetzung von CO und Wasser zu Wasserstoff und $CO_2$ zur Verfügung steht. Daher besteht eine wichtige Ergänzung des erfindungsgemäßen Verfahrens darin, daß die über den Teilstrom ausgeschleuste und damit für den stöchiometrischen Betrieb der CO-Konvertierungsstufe nach der Reaktionsgleichung

$$CO + H_2O \rightarrow CO_2 + H_2$$

fehlende CO-Gasmenge durch eine geringfügig erhöhte Zufuhr des Einsatzstoffes Erdgas in den Primärreformer kompensiert wird. Diese lediglich geringfügig erhöhte Erdgaszufuhr in den Primärreformer, die den Rohstoffbedarf für die CO-Erzeugung sicherstellt, stellt ein wichtiges ergänzendes Merkmal der Erfindung dar.

Mit der Erfindung werden folgende Vorteile erzielt:

1. Zur Erzeugung von CO nach dem erfindungsgemäßen Verfahren sind gegenüber konventionellen Reformertechnologien nur 25 % des Erdgaseinsatzes als Rohstoffbedarf notwendig.

2. Die Gewinnung von CO aus Gasströmen mit sehr geringen CO-Gehalten war bisher unwirtschaftlich. Dieser Nachteil wird durch das erfindungsgemäße Verfahren erstmalig behoben.

3. Die atmosphärische $CO_2$-Emission des Reformers der Ammoniak- bzw. $H_2$-Anlage reduziert sich beträchtlich (molmäßig genau um den Betrag, der an CO produziert wird).

4. Das gewünschte Zielprodukt CO wird neben dem Wasserstoff als einziges Produkt in hoher Reinheit erhalten.

5. Durch Mitnutzung des Primär- und Sekundärreformers einer Anlage zur Erzeugung von Wasserstoff bzw. Ammoniak werden erhebliche Investitionskosten eingespart.

6. Der Betrieb der Steamreformer-Anlage zur Erzeugung von Ammoniak oder Wasserstoff wird nicht nachteilig beeinflußt; die produzierte Synthesegasmenge und deren Zusammensetzung bleiben dieselbe.

Im Folgenden wird die Erfindung an Hand eines in der Zeichnung dargestellten Ausführungsbeispiels naher erläutert. Es zeigen:

Fig.1 ein schematisches Fließbild einer Anlage zur Durchführung des erfindungsgemäßen Verfahrens mit einer konventionellen Steamreformer-Anlage zur Erzeugung von Ammoniak im Hauptstrom und einer im Seitenstrom betriebenen CO-Aufbereitungs- und Abtrennungsanlage mit Rückführung der wasserstoffreichen Restgase in den Hauptstrom,

Fig.2 ein Fließbild mit einem Auschnitt der Steamreformeranlage und den daraus abzweigenden CO-Aufbereitungs- und Abtrennungsanlagenteilen.

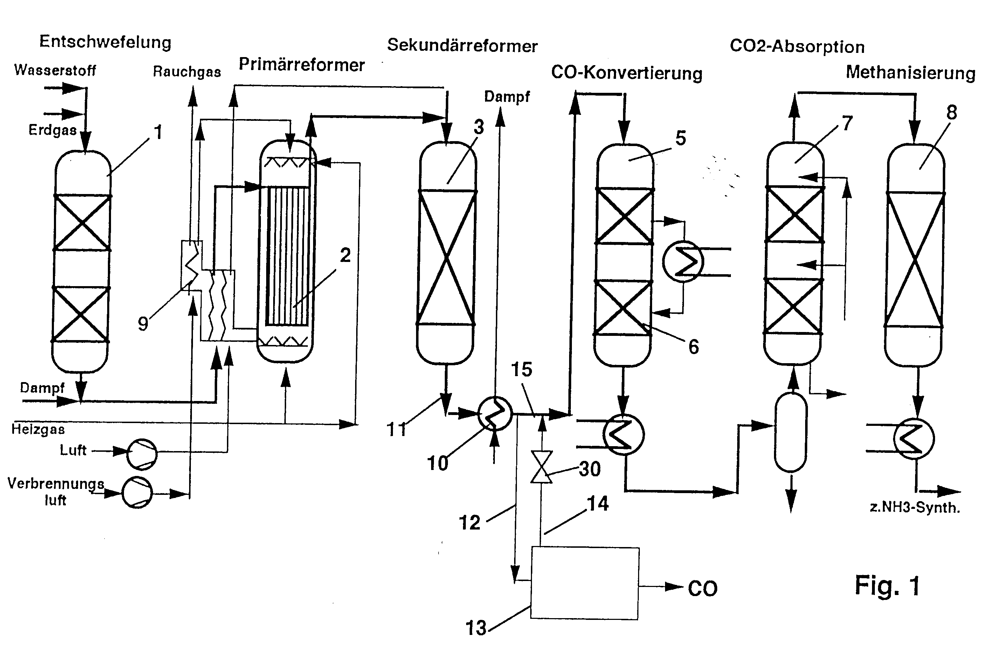

Die konventionelle Steamreformeranlage zur Erzeugung von Ammoniak besteht gemäß Fig. 1 aus den Verfahrensstufen Erdgasentschwefelung 1, indirekt mit Brennstoff beheizter Primärreformer 2, direkt mit Erdgas und Verbrennungsluft befeuerter Sekundärreformer 3, CO-Konverter 4 mit dem HT-Shift-Reaktor 5 und LT-Shift-Reaktor 6, $CO_2$-Absorber 7 und Methanisierungsreaktor 8. Dem Primärreformer 2 werden die im Wärmetauscher 9 vorgewärmten Edukte, d.h. entschwefeltes, in der Hauptsache aus Methan bestehendes Erdgas, Dampf und Luft zugeführt. Außerdem wird der Primärreformer 2 mit dem notwendigen Heizgas und der Verbrennungsluft zur indirekten Befeuerung versorgt. Die heißen, aus dem Primärreformer 2 austretenden Reaktionsgase werden anschließend in den autothermisch arbeitenden Sekundärreformer 2 geleitet, in dem eine weitere katalytische Reaktion zu CO stattfindet, so daß am Austritt des Sekundärreformers nur noch eine sehr geringe Methankonzentration vorliegt. Dem Sekundärreformer 3 wird ebenfalls vorgewärmte Luft (Sauerstoff) zugeführt. Das aus dem Sekundärreformer 3 austretende Synthesegas wird über einen Wärmetauscher 10 der CO-Konvertierungsstufe 4 mit den Shift-Reaktoren 5 und 6 zugeführt, in denen CO nach der Wassergasreaktion mit dem noch vorhandenen Wasserdampf katalytisch zu $CO_2$ und $H_2$ umgesetzt wird. Im Anschluß daran wird das $CO_2$ im Absorber 7 ausgewaschen und das verbleibende wasserstoffreiche Gas der Methanisierungsstufe 8 zugeführt, in der das restliche Methan mit CO zu $H_2$ und $CO_2$ umgesetzt wird. Die beschriebenen Reaktionsstufen sind bei Steamreformer-Anlagen zur Ammoniak- oder $H_2$-Erzeugung bekannt und gehören somit zum Stand der Technik.

Ein wesentlicher, vom Stand der Technik abweichender Prozessschritt besteht nun darin, daß von dem Sekundärreformerproduktstrom 11 nach dem Wärmetauscher 10 ein hauptsächlich aus $H_2$, $H_2O$-Dampf, Methan, CO, $CO_2$ und größeren Stickstoffmengen bestehender Rohsynthesegas-Teilstrom 12 abgezweigt wird, der einer mehrstufigen CO-Abtrennungsanlage 13 zugeführt wird und die verbleibende, CO-freie, im Wesentlichen aus $H_2$, $CH_4$ und $N_2$ bestehende Gasmischung nach Komprimierung und Aufheizung als Mischgasstrom 14 mit dem nach der Abtrennung des Teilstroms 12 verbleibenden, zur CO-Konvertierungsstufe 4 strömenden Hauptsynthesegasstrom 15 wiedervereinigt wird.

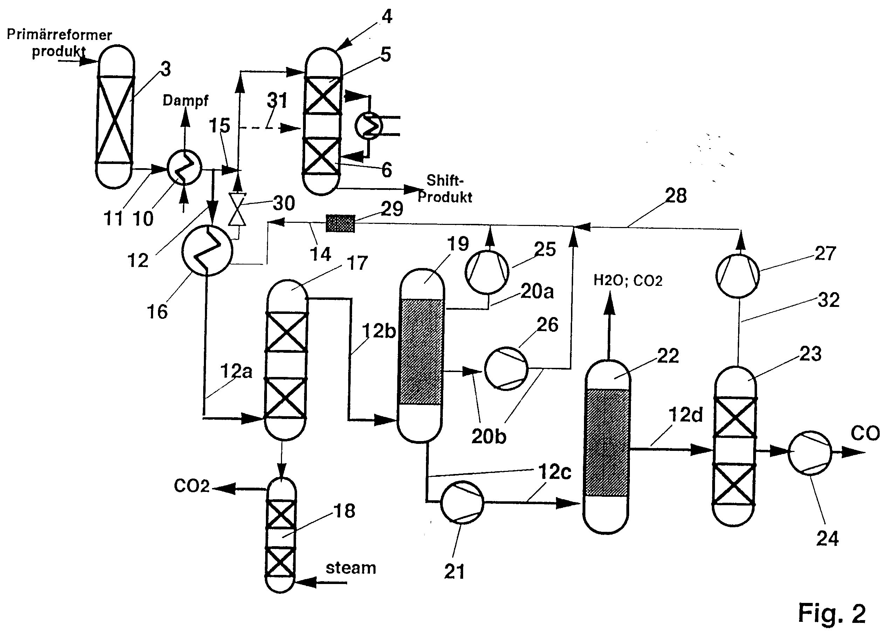

Die Abtrennung der einzelnen Gaskomponenten $H_2O$-Dampf, $CO_2$, $H_2$, Spuren $H_2O$, $CO_2$ und $N_2$ vom CO im Teilgasstrom 12 erfolgt gemäß Fig. 2 mit Hilfe an sich bekannter Einzeltrennstufen. So wird die Kühlung des aus dem Hauptstrom 11 hinter dem Sekundärreformer 3 entnommenen, 200°C-500°C heißen Teilgasstroms 12 durch einen Gegenstromwärmetauscher 16 realisiert, der auf der Seite des Kühlmediums mit dem aufzuheizenden und in die Konvertierungstufe 4 einzuleitenden Mischgasstrom 14 beaufschlagt wird. Dabei kondensiert der größte Teil des im Teilstrom 12 enthaltenen Wasserdampfes aus.

Anschließend wird der von Wasser befreite, abgekühlte Teilgasstrom 12a in eine $CO_2$-Abtrennungsstufe 17 geleitet, in der eine selektive $CO_2$-Absorption an organischen Aminen oder eine Chemisorption in einer Pottaschelösung durchgeführt wird. Die beladene Pottasche- oder Aminlösung wird einer nachgeschalteten Desorptionsstufe 18 zugeführt, in der das $CO_2$ abgestrippt wird.

Der abgekühlte und von $CO_2$ befreite Teilstrom 12b wird nunmehr zur Abtrennung des Wasserstoffanteils in eine Druckwechsel-Adsorptions-Anlage 19 (PSA-Anlage) geleitet; die mehrere reine Wasserstofffraktionen 20a, 20b unter verschiedenen Drücken liefert. Derartige PSA-Anlagen sind handelsübliche Anlagenkomponenten (z.B. Fa. Linde, Deutschland).

Der nach der PSA-Anlage 19 verbleibende wasserstofffreie Teilgasstrom 12c wird verdichtet (Verdichter 21) und in der nachgeschalteten Zeolith-Adsorberkolonne 22 von noch vorhandenen $CO_2$ - und Wasserdampfspuren befreit.

Der am Ausgang der Zeolith-Absorberkolonne 22 vorliegende, lediglich noch aus CO und einem Stickstoff/Methan Restgasgemisch bestehende Gasstrom 12d wird zur weiteren Verarbeitung einer Tieftemperatur-Rektifikationsstufe 23 zugeführt. In dieser Verfahrensstufe wird der CO-Gasstrom abgetrennt und mittels des Verdichters 24 auf den gewünschten Verbraucherdruck komprimiert.

Die an der PSA-Anlage 19 anstehenden Wassertstofffreaktionen 20a und 20b und das in der Tieftemperatur-Rektifikationsstufe 23 abgetrennte Stickstoff/Methan Restgasgemisch 32 werden mittels der Druck-geregelten Verdichter 25, 26 und 27 auf ein höheres, gemeinsames Druckniveau verdichtet und in der Rückführungsleitung 28 mit dem statischen Mischer 29 zu einem Mischgasstrom 14 vereinigt. Der Mischgasstrom 14 wird, wie oben beschrieben, im Gegenstromwärmetauscher 16 wieder auf Temperaturen von 200°C bis 500°C aufgeheizt und danach über die Düse 30 vor der CO-Konvertierungsstufe 4 der Steamreformeranlage in den nicht ausgekreisten Anteil 15 des vom Sekundärreformer 3 kommenden Rohsynthesegasstromes 11 zurückgespeist. Alternativ kann der Mischgasstrom 14 auch über die Leitung 31 zwischen der HT-Shiftstufe 5 und der NT-Shiftstufe 6 in den CO-Konverters 4 eingedüst werden. Außer dem im Wärmetauscher 16 abgeschiedenen Wasserdampf und dem in der Desorptionsstufe 18 anfallenden $CO_2$, sowie dem in der Tieftemperatur-Rektifikationsstufe 23 gewonnenen CO-Reingasstrom werden also sämtliche in der CO-Abtrennungsanlage 13 abgespaltenen Gasfraktionen in den Hauptstrom der Steamrefomeranlage rezykliert.

Durch die AusWeisung eines der geforderten CO-Menge entsprechenden Teilstromes 12 aus dem Rohsynthesegasstrom 11 und dessen praktisch CO-, $CO_2$- und wasserfreie Wiedereinspeisung vor bzw. in den CO-Konverter 4 kommt es zu einer entsprechenden CO-Verarmung des Rohsynthesegases vor den Shiftreaktoren 5 und 6 im CO-Konverter 4. Daraus resultiert eine Unterbelastung der Shiftreaktoren 5 und 6 und folglich ein Verlust an Wasserstoff bei der Konvertierung, die entsprechend der Reaktionsgleichung

$$CO+H_2O \rightarrow CO_2+H_2$$

abläuft. Dieser Nachteil wird aber, wie weiter unten beschrieben, durch eine geringfügig erhöhte Zufuhr des Einsatzstoffes Erdgas in den Primärreformer 2 behoben. Anstelle der Düse 30 kann alternativ auch ein Entspannungsventil verwendet werden.

Beispiel

Es sollen 62000 t/a Rein-CO mit Hilfe des erfindungsgemäßen Verfahrens hergestellt werden. Der Ammoniakreformer gemäß Fig. 1 hat eine Kapazität von 110 000 $Nm^3$/h Ammoniaksynthesegas mit einem stöchiometrischen Verhältnis $N_2/H_2$ von 1:3. Es soll ein Rein-CO-Gasstrom von 62 000 t/a zusätzlich mit Hilfe des erfindungsgemäßen Verfahrens erzeugt werden.

Der nach dem Sekundärreformer 3 vorliegende Rohsynthesegasstrom 11 hat die nachfolgend aufgeführte Zusammensetzung:

| | |
|---|---|
| $H_2O$ | 35 Vol.-% |
| $CO_2$ | 4 Vol.-% |
| CO | 8 Vol.-% |
| $N_2$ | 15 Vol.-% |

| (fortgesetzt) | |
|---|---|
| $H_2$ | 35,5 Vol.-% |
| $CH_4$ | 2 Vol.-% |
| Edelgase | 0,5 Vol.-% |

Man erkennt, daß die CO-Konzentration sehr niedrig ist und quasi nur eine Verunreinigung darstellt. Es ist eine Besonderheit des erfindungsgemäßen Verfahrens, daß auch unter diesen Bedingungen eine wirtschaftliche Rein-CO-Erzeugung gewährleistet werden kann. Der Rohsynthesegasstrom 11 wird anschließend in die zwei Teilströme 12 und 15 im Verhältnis 1:2 entsprechend der gewünschten Rein-CO-Menge aufgeteilt. Der größere Teilstrom 15 von ca. 140000 $Nm^3$/h Rohsynthesegas mit einer Temperatur von 350°C und einem Druck von 30 bar wird in konventioneller Weise in Richtung HT-Shift-Stufe 5 des Ammoniakreformers geführt, während der zweite Teilstrom 12 von ca. 75 000 $Nm^3$/h in dem Gegenstromwärmetauscher 16 auf 50°C gekühlt wird. Dabei werden 95 % bis 98 % des im Rohsynthesegas enthaltenen Wassers auskondensiert. Das im Wärmetauscher 16 auf der Gegenseite aufzuheizende Medium ist der wasserfreie und CO-arme Mischgasstrom 14, der aus der CO-Abtrennungsstufe 13 in den Ammoniakreformer rezykliert wird. Nach der Abkühlung des Rohsynthesegasteilstromes 12 wird der wasserarme Teilstrom 12a gemäß Fig. 2 in den nach dem Pottascheverfahren arbeitenden $CO_2$-Wäscher 17 eingeschleust, wo die Hauptmenge des im Rohsynthesegas enthaltenen $CO_2$ chemisorbiert wird. Die beladene Pottaschelösung wird in der Desorptionsstufe 18 thermisch regeneriert und das abgestrippte $CO_2$ einer weiteren Verwendung zugeführt. Der nunmehr von $H_2O$ (Hauptmenge) und $CO_2$ befreite Teilstrom 12b wird dann der Wasserstoff-PSA-Anlage 19 zugeführt, wo dieser Gasstrom praktisch vollständig von Wasserstoff befreit wird. Die Wasserstoff-PSA-Anlage 19 liefert eine Hochdruck- und eine Niederdruckfraktion 20a und 20b an Wasserstoff. Der danach verbleibende Teilstrom 12c besteht nunmehr aus CO, $N_2$, $CH_4$ und Edelgasspuren und enthält ferner noch Spuren an $CO_2$ und Wasser. Die letztgenannten Komponenten werden in der der Wasserstoff-PSA-Anlage 19 nachgeschalteten Zeolith-Adsorberstufe 22 aus dem Teilstrom 12c entfernt. Der hinter der Zeolith-Adsorberstufe 22 vorliegende Teilstrom 12d wird anschließend der Tieftemperatur-Rektifikationsstufe 23 zugeführt, wo eine Verflüssigung und Abtrennung des CO stattfindet, während sich $N_2$ und $CH_4$ in dem über Kopf gehenden Gasstrom 32 wiederfinden. Ein wesentlicher Schritt besteht nun darin, daß die aus den beiden Trennstufen 19 und 23 abgeführten Teilgasströme 20a, 20b und 32 durch Zwischenverdichtung mittels der Verdichter 25, 26 und 27 auf ein gleiches Druckniveau oberhalb des Drucks im HT-Shiftreaktor 5 gebracht, im statischen Mischer 29 zum Mischgasstrom 14 vereinigt, der Mischgasstrom 14 anschließend im Gegenstromwärmetauscher 16 auf eine Temperatur von ca. 330°C gebracht und über die Düse 30 in den Hauptsynthesegasstrom 15 unmittelbar vor dem CO-Konverter 4 des Ammoniakreformers zurückgespeist und eingemischt wird. Die Verdichtung der Teilströme 20a, 20b,32 erfolgt in dem Maße, in dem der Druck des betreffenden Teilstroms unterhalb des Druckes des Synthesegashauptstroms 15 liegt, was von den für die erfindungsgemäße Lösung nebensächlichen Betriebsdaten der PSA-Anlage 19 und der Tieftemperatur-Rektifikation 23 abhängt.

Die einzelnen Stufen der CO-Abtrennungsanlage 13, d.h. der $CO_2$-Wäscher 17, die Wasserstoff-PSA-Anlage 19, die Zeolith-Absorberstufe 22 und die Tieftemperatur-Rektifikationsstufe 23 werden so ausgelegt und betrieben, daß im Rein-CO Strom <100 ppm Wasserstoff und <50 ppm $CH_4$ enthalten sind, was den Einsatz des Rein-CO z.B. für die Produktion von Isocyanaten ermöglicht. Welche Trennstufen im einzelnen eingesetzt werden, ist für das erfindungsgemäße Verfahren nicht wesentlich.

Das erfindungsgemäßen Verfahrens kann auch in Verbindung mit einem Wasserstoff erzeugenden Steamreformer durchgeführt werden, der den Wasserstoff nicht für eine Ammoniakanlage bereitstellt.

Der Hauptvorteil des erfindungsgemäßen Verfahrens besteht bei allen beschriebenen Ausführungsformen darin, daß die Wasserstofferzeugung und die Erzeugung von Rein-CO in synergistischer Weise miteinander gekoppelt werden, so daß nur ein äußerst geringer Einsatz von fossilen Rohstoffen (Erdgas) für die zusätzliche Bereitstellung großer Rein-CO-Mengen notwendig ist.

Bei einem konventionell betriebenen Ammoniakreformer mit 100 %-igem Wasserstoffumsatz erfolgt die Erdgasverarbeitung nach folgenden Reaktionsgleichungen:

1. $CH_4 + H_2O \rightarrow CO + 3H_2$ (Primärreformer 2 +Sekundärreformer 3)
2. $CO + H_2O \rightarrow CO_2 + H_2$ (HT-Shiftreaktor 5+ LT-Shiftreaktor 6)
zusammengefaßt: $CH_4 + 2\ H_2O \rightarrow CO_2 + 4\ H_2$ (Brutto-Reaktion)

Dies bedeutet, daß der Ammoniakreformer je Mol $CH_4$ brutto 4 Mol $H_2$ produziert. Wird nun ein Teil des CO vor der Konvertierung ausgeschleust und aus dem Rohsynthesegas abgetrennt, so resultiert daraus ein Wasserstoffverlust in den Shiftreaktoren des CO-Konverters, da weniger CO für die Reaktion zur Verfügung steht. Um aber das gewünschte stöchiometrische Verhältnis $N_2/H_2$ von 1:3 für die Ammoniaksynthese einzuhalten, muß dieser fehlende Wasserstoff durch eine Erhöhung der Einsatz-Erdgases in den Primärreformer 2 ausgeglichen werden. Während im CO-Konverter 4 aber je Mol durch die Rein-CO-Erzeugung "verlorenes CO" je ein Mol $H_2$ im Ammoniaksynthesegas fehlt, können durch Nachfahren von nur 1 mol $CH_4$ in den Primärreformer 2 4 Mole $H_2$ ergänzt werden; d.h. für die zusätzliche Rein-CO-Erzeugung am Steamreformer der Ammoniakanlage wird nach dem erfindungsgemäßen Verfahren nur ca. 25% des Erdgaseinsatzes notwendig, den man benötigen würde, wenn CO in einem separaten Reformer oder einer anderen Anlage zur Synthesegaserzeugung hergestellt werden würde. Dies ist ein ganz wesentlicher Vorteil des erfindungsgemäßen Verfahrens.

Würde dieser separate Reformer mit einem $CH_4/CO_2$-Gemisch betrieben, so würde die Kohlenstoffbilanz dieser konkurrierenden Lösung zwar etwas verbessert werden; der grundsätzliche Vorteil des erfindungsgemäßen Verfahrens bliebe aber erhalten. Die erfindungsgemäße Erzeugung von Rein-CO in Verbindung mit einem Steamreformer zur Ammoniak- oder Wasserstofferzeugung minimiert den Erdgaseinsatz, schont damit Ressourcen und garantiert niedrige Betriebskosten. In ökologischer Hinsicht wirkt es sich vorteilhaft aus, daß die Kohlenstoff-Differenz zwischen ausgeschleuster CO-Menge nach dem Sekundärreformer 3 und zum Ausgleich der Wasserstoffbilanz ergänzend in den Primärreformer 2 nachgefahrenen Erdgasmenge nicht mehr als $CO_2$-Emission der Ammoniakanlage in die Atmosphäre in Erscheinung tritt. Im vorliegenden Beispiel bedeutet dies eine Reduktion der $CO_2$-Emission um ca. 80 000 t/a. Ein weiterer verfahrenstechnischer Vorteil des erfindungsgemäßen Verfahrens besteht darin, daß der Ammoniakreformer und die Ammoniaksynthese stromabwärts des CO-Konverters 4 von der erfindungsgemäßen CO-Gewinnung weder hinsichtlich des Mengenstromes, noch der Gaszusammensetzung in irgendeiner Weise beeinflußt werden. Lediglich die $CO_2$-Waschstufe 7 des Steamreformers kann mit einer geringeren Leistung betrieben werden, was sich vorteilhaft auf deren Dampfverbrauch auswirkt. Weitere Vorteile des erfindungsgemäßen Verfahrens liegen darin, daß das zum Betrieb der Ammoniakanlage bzw. des Steamreformers vorhandene Betriebspersonal die CO-Erzeugung mit überwachen kann, so daß für die CO-Produktion keine zusätzlichen Arbeitskräfte erforderlich sind, was die Wirtschaftlichkeit des erfindungsgemäßen Verfahrens weiter steigert.

LITERATUR

[1] Linde-Berichte aus Technik und Wissenschaft, 62/88 Berninger, R. , Fortschritte bei der $H_2$/CO-Tieftemperaturzerlegung

[2] Tindall, Crews "Alternative technologies to steam-methane reforming" in Hydrocarbon processing, Nov. 1995, S.75ff

[3] US 4 836 833

[4] EP 291 857

[5]     US 5 102 645

[6]     Linde-Berichte aus Technik und Wissenschaft, 72/1994, Lembeck M. "Das Linde-Ammoniak-Konzept (LAC)"

[7]     DE 4 236 263

**Patentansprüche**

1.  Verfahren zur gleichzeitigen Gewinnung von reinem Kohlenmonoxid und reinem Wasserstoff durch Weiterverarbeitung eines aus den Gaskomponenten $H_2$, $H_2O$-Dampf, $CH_4$, $CO_2$, CO und gegebenenfalls $N_2$ bestehenden Synthesegasstromes, dadurch gekennzeichnet

    a) daß in einer Steamreformer-Anlage zur Erzeugung von Wasserstoff oder Ammoniak mit einem Primärreformer (2), einem Sekundärreformer (3) und einer darauf folgenden CO-Konvertierungsstufe (4) zwischen Sekundärreformer (3) und CO-Konvertierungsstufe (4) ein Teilgasstrom (12) des aus dem Sekundärreformer (3) austretenden Synthesegasstromes (11) mit einem CO-Gehalt zwischen 2 und 20 Mol %, vorzugsweise zwischen 5 und 10 Mol % mit einer Temperatur von 200 bis 500 °C und einem Druck im Bereich von 15 bis 50 bar entnommen wird,
    b) daß dieser Teilgasstrom (12) auf eine Temperatur unter 100°C abgekühlt und dabei der im Gasstrom enthaltene Wasserdampf überwiegend auskondensiert wird,
    c) daß das verbleibende Rohsynthesegas (12a) anschließend über eine mehrstufige Gastrennanlage geführt wird, in der die Gaskomponenten $H_2$, Rest-$H_2O$, $CH_4$, $CO_2$ und gegebenenfalls $N_2$ einzeln oder gemeinsam vom CO abgetrennt werden,
    d) daß die vom CO abgetrennten Gaskomponenten $H_2$, $CH_4$ und gegebenenfalls $N_2$ auf einen Druck komprimiert werden, der oberhalb des Drucks in der CO-Konvertierungsstufe (4) liegt und zu einem Mischgasstrom (14) wiedervereinigt werden,
    e) daß dieser Mischgasstrom (14) nach Aufheizung auf eine Temperatur von 200°C-500°C der CO-Konvertierungsstufe (4) des Steamreformers wieder zugeführt wird,
    f) und daß die verbleibende reine CO-Fraktion separat entnommen und gegebenenfalls einer Weiterverarbeitung zugeführt wird.

2.  Verfahren nach Anspruch 1, dadurch gekennzeichnet,

    a) daß der unter 100°C abgekühlte Teilgasstrom (12a) einer $CO_2$-Abtrennungsstufe (17) zugeführt wird,
    b) daß der von $CO_2$ befreite Teilgasstrom (12b) durch eine Wasserstoff-Abscheidungsstufe (19) geleitet wird, in der eine oder mehrere wasserstoffreiche Gasfraktionen (20a,20b) abgetrennt werden,
    c) daß der nach der Wasserstoff-Abscheidungsstufe (19) verbleibende Teilgasstrom (12c) von $CO_2$- und Wasserspuren gereinigt wird,
    d) daß der von $CO_2$- und Wasserspuren befreite Teilgasstrom (12d) in einer CO-Abscheidestufe (23) in einen reinen CO-Produktgasstrom und ein Methan-Stickstoff Restgasgemisch (32) aufgetrennt wird,
    e) daß die wasserstoffreichen Gasfraktionen (20a,20b) und das Stickstoff-Methan Restgasgemisch (32) getrennt oder gemeinsam auf einen Druck verdichtet werden, der oberhalb des Drucks in der CO-Konvertierungsstufe (4) liegt und zu einem wasserfreien und CO-armen Mischgasstrom (14) vereinigt werden und
    f) daß der Mischgasstrom (14) auf eine Temperatur von 200°C-500 °C aufgeheizt wird und nach Vermischung mit dem nach der Abtrennung des Teilstroms (12) verbleibenden Hauptsynthesegasstrom (15) in die CO-Konvertierungsstufe (4) eingespeist wird.

3.  Verfahren nach Anspruch 2, dadurch gekennzeichnet, daß die Aufheizung des Mischgasstroms (14) auf Temperaturen von 200°C-500°C in einem Gegenstromwärmetauscher (16) erfolgt, der gleichzeitig zur Kühlung des zwischen Sekundärreformer (3) und CO-Konvertierungsstufe (4) entnommenen Teilgasstroms (12) auf Temperaturen unter 100 °C verwendet wird.

4.  Verfahren nach Anspruch 2 - 3, dadurch gekennzeichnet, daß das $CO_2$ aus dem Teilstrom (12a) in der $CO_2$-Abtrennungsstufe (17) durch eine Pottaschelösung ausgewaschen wird.

5.  Verfahren nach Anspruch 2 - 3, dadurch gekennzeichnet, daß das $CO_2$ aus dem Teilstrom (12a) in der $CO_2$-Abtrennungsstufe (17) durch eine selektive $CO_2$-Wäsche mit Aminen als Selektiv-Lösungsmittel entfernt wird.

6.  Verfahren nach Anspruch 2 - 5, dadurch gekennzeichnet, daß als Wasserstoff-Abscheidungsstufe zur Abtrennung der wasserstoffreiche(n) Gasfraktionen (20a,20b) aus dem Teilstrom (12b) eine PSA-Anlage (19) verwendet wird.

7.  Verfahren nach Anspruch 2 - 6, dadurch gekennzeichnet, daß die Auftrennung des Teilstroms (12d) in einen reinen CO-Produktgasstrom und ein Stickstoff-Methan Restgasgemisch (32) in der CO-Abscheidestufe durch eine Tieftemperatur-Rektifikationsanlage (23) erfolgt.

8. Verfahren nach Anspruch 1- 7, dadurch gekennzeichnet, daß das Verhältnis von dem stromabwärts des Sekundärreformers (3) weitergeführten Hauptgasmengenstrom (15) und dem abgezweigten Teilmengenstrom (12) zwischen 1:1 und 4:1 liegt.

9. Verfahren nach Anspruch 1 - 8, dadurch gekennzeichnet, daß die über den Teilstrom (12) ausgeschleuste und damit für den stöchiometrischen Betrieb der CO-Konvertierungsstufe (4) nach der Reaktionsgleichung

$$CO + H_2O \rightarrow CO_2 + H_2$$

fehlende CO-Gasmenge durch eine erhöhte Zuführ des Einsatzstoffes Erdgas in den Primärreformer (2) kompensiert wird.

**Claims**

1. Process for obtaining simultaneously pure carbon monoxide and pure hydrogen by further processing of a synthesis gas stream comprising the gas components $H_2$, $H_2O$ vapour, $CH_4$, $CO_2$, $CO$ and optionally $N_2$, characterised in that

   a) in a steam reformer plant for hydrogen or ammonia generation, having a primary reformer (2), a secondary reformer (3) and downstream thereof a CO conversion stage (4), there is removed between the secondary reformer (3) and the CO conversion stage (4) a part gas stream (12) of the synthesis gas stream (11) discharged from the secondary reformer (3), which has a CO content of between 2 and 20 mol.%, preferably between 5 and 10 mol.%, and is at a temperature of from 200 to 500°C and a pressure within the range 15 to 50 bar,

   b) the latter part gas stream (12) is cooled to a temperature below 100°C, thereby condensing out the major part of the steam contained in the gas stream,

   c) the remaining raw synthesis gas (12a) is then guided by way of a multistage gas separation plant in which the gas components $H_2$, residual $H_2O$, $CH_4$, $CO_2$ and optionally $N_2$ are separated, either individually or together, from the CO,

   d) the gas components $H_2$, $CH_4$ and optionally $N_2$ separated from the CO are compressed to a pressure which exceeds the pressure in the CO conversion stage (4) and are recombined to form a mixed gas stream (14),

   e) the latter mixed gas stream (14) is supplied again to the CO conversion stage (4) of the steam reformer after being heated to a temperature of from 200 to 500°C,

   f) and the remaining pure CO fraction is removed in separate manner and is optionally supplied to further processing.

2. Process according to Claim 1, characterised in that

   a) the part gas stream (12a) cooled to below 100°C is supplied to a $CO_2$ separation stage (17),

   b) the part gas stream (12b) from which $CO_2$ has been removed is guided through a hydrogen separation stage (19) in which one or a plurality of hydrogen-rich gas fraction(s) (20a, 20b) is/are separated,

   c) the part gas stream (12c) remaining downstream of the hydrogen separation stage (19) is purified of traces of $CO_2$ and water,

   d) the part gas stream (12d) from which traces of $CO_2$ and water have been removed is separated in a CO separation stage (23) into a pure CO product gas stream and a methane-nitrogen residual gas mixture (32),

   e) the hydrogen-rich gas fractions (20a, 20b) and the nitrogen-methane residual gas mixture (32) are compressed, either separately or together, to a pressure which exceeds the pressure in the CO conversion stage (4) and are combined to form a water-free, low-CO mixed gas stream (14), and

   f) the mixed gas stream (14) is heated to a temperature of from 200 to 500°C and is fed into the CO conversion stage (4) after being mixed with the main synthesis gas stream (15) remaining downstream of the separation of the part stream (12).

3. Process according to Claim 2, characterised in that the mixed gas stream (14) is heated to temperatures of from 200 to 500°C in a countercurrent heat exchanger (16) which is used simultaneously to cool to temperatures below 100°C the part gas stream (12) which is removed between the secondary reformer (3) and the CO conversion stage (4).

4. Process according to Claims 2 to 3, characterised in that the $CO_2$ is scrubbed from the part stream (12a) in the $CO_2$ separation stage (17) using a potash solution.

5. Process according to Claims 2 to 3, characterised in that the $CO_2$ is removed frog the part stream (12a) in the $CO_2$ separation stage (17) using a selective $CO_2$ wash having amines as the selective solvent.

6. Process according to Claims 2 to 5, characterised in that a PSA plant (19) is used as the hydrogen separation stage to separate the hydrogen-rich gas fraction(s) (20a, 20b) from the part stream (12b).

7. Process according to Claims 2 to 6, characterised in that the part stream (12d) is separated into a pure CO product gas stream and a nitrogen-methane residual gas mixture (32) in the CO separation stage by a low-temperature rectification plant (23).

8. Process according to Claims 1 to 7, characterised in that the ratio of the main gas volume flow (15) guided further downstream of the secondary reformer (3) and the branched-off part volume flow (12) is between 1 : 1 and 4 : 1.

9. Process according to Claims 1 to 8, characterised in that the CO gas volume transferred out by way of the part stream (12) and hence in deficit in the stoichiometric operation of the CO conversion stage (4) in accordance with the reaction equation

$$CO + H_2O \rightarrow CO_2 + H_2$$

is compensated by an increased supply of the natural gas feedstock to the primary reformer (2).

**Revendications**

1. Procédé pour l'obtention simultanée de monoxyde de carbone pur et d'hydrogène pur par traitement ultérieur d'un courant de gaz de synthèse constitué par du $H_2$, par de la vapeur de $H_2O$, par du $CH_4$, par du $CO_2$, par du CO et le cas échéant par du $N_2$ à titre de composants gazeux, caractérisé en ce que

a) dans une installation de reformage à la vapeur pour obtenir de l'hydrogène ou de l'ammoniac, comprenant un dispositif de reformage primaire (2), un dispositif de reformage secondaire (3) et une étape de conversion du CO (4) qui y fait directement suite, entre le dispositif de reformage secondaire (3) et l'étape de conversion du CO (4), on prélève un courant de gaz partiel (12) du courant de gaz de synthèse (11) provenant du dispositif de reformage secondaire (3), possédant une teneur en CO entre 2 et 20 moles %, de préférence entre 5 et 10 moles %, à une température de 200 à 500°C et sous une pression dans le domaine de 15 à 50 bar,

b) on refroidit ce courant de gaz partiel (12) à une température inférieure à 100°C et on sépare en l'occurrence par condensation dans une large mesure la vapeur d'eau contenue dans le courant de gaz,

c) on guide par la suite le gaz de synthèse brut (12a) qui subsiste à travers une installation de séparation de gaz à plusieurs étapes dans laquelle on sépare du CO, de manière individuelle ou de manière conjointe, le $H_2$, le $H_2O$ résiduel, le $CH_4$, le $CO_2$ et le cas échéant le $N_2$ à titre de composants gazeux,

d) on comprime le $H_2$, le $CH_4$ et le cas échéant le $N_2$ à titre de composants gazeux séparés du CO, pour obtenir un pression qui est supérieure à la pression régnant dans l'étape de conversion du CO (4) et on les soumet à une recombinaison pour obtenir un courant de gaz mixte (14),

e) on réachemine ce courant de gaz mixte (14), après réchauffement à une température de 200°C à 500°C, à l'étape de conversion du CO (4) du dispositif de reformage à la vapeur,

f) et on prélève séparément la fraction de CO pur qui subsiste et on l'achemine le cas échéant à un traitement ultérieur.

2. Procédé selon la revendication 1, caractérisé en ce que

a) on achemine le courant de gaz partiel (12a) refroidi à une température inférieure à 100°C, à une étape de séparation du $CO_2$ (17),

b) on guide à travers une étape de séparation de l'hydrogène (19) le courant de gaz partiel (12b) libéré du $CO_2$, étape dans laquelle on sépare une ou plusieurs fractions de gaz (20a, 20b) riches en hydrogène,

c) on purifie ensuite le courant de gaz partiel (12c) subsistant après l'étape de séparation de l'hydrogène (19) en éliminant les traces de $CO_2$ et d'eau,

d) on sépare le courant de gaz partiel (12d) libéré des traces du $CO_2$ et d'eau, dans une étape de séparation de CO (23) en un courant de gaz de produit de CO pur et en un mélange de gaz résiduels de méthane-azote (32),

e) on comprime les fractions de gaz riches en hydrogène (20a, 20b) et le mélange de gaz résiduels d'azote-méthane de manière séparée ou de manière conjointe pour obtenir une pression qui est supérieure à la pression régnant dans l'étape de conversion du CO (4) et on les combine pour obtenir un courant de gaz mixte (14) anhydre et pauvre en CO, et

f) on réchauffe ce courant de gaz mixte (14) à une température de 200°C à 500°C et, après mélange avec le courant de gaz de synthèse principal (15) subsistant après la séparation du courant partiel (12), on l'alimente dans l'étape de conversion du CO (4).

3. Procédé selon la revendication 2, caractérisé en ce que le réchauffement du courant de gaz mixte (14) à des températures de 200°C à 500°C a lieu dans un échangeur de chaleur (16) travaillant a contre-courant que l'on utilise simultanément pour refroidir à des températures inférieures à 100°C, le courant de gaz partiel (12) prélevé entre le dispositif de reformage secondaire (3) et l'étape de conversion du CO (4).

4. Procédé selon les revendications 2-3, caractérisé en ce qu'on élimine par lavage le $CO_2$ du courant partiel (12a) dans l'étape de séparation du $CO_2$ (17) à travers une solution de carbonate de potassium.

5. Procédé selon les revendications 2-3, caractérisé en ce qu'on élimine le $CO_2$ du courant partiel (12a) dans l'étape de séparation du $CO_2$ (17) via un lavage sélectif du $CO_2$ avec des amines à titre de solvant sélectif.

6. Procédé selon les revendications 2 à 5, caractérisé en ce qu'on utilise, à titre d'étape de séparation de l'hydrogène pour séparer du courant partiel (12b) les fractions de gaz (20a, 20b) riches en hydrogène, une installation PSA (19).

7. Procédé selon les revendications 2 à 6, caractérisé en ce que la séparation du courant partiel (12d) en un courant de gaz de produit de CO pur et en un mélange de gaz résiduels d'azote-méthane (32) a lieu, dans l'étape de séparation du CO, via une installation de rectification (23) travaillant à basse température.

8. Procédé selon les revendications 1 à 7, caractérisé en ce que le rapport du courant quantitatif de gaz principal (15) guidé ultérieurement en aval du dispositif de reformage secondaire (3) et le courant quantitatif partiel dévié (12) se situe entre 1:1 et 4:1.

9. Procédé selon les revendications 1 à 8, caractérisé en ce qu'on compense la quantité de CO gazeux éclusée au-dehors via le courant partiel (12) et qui fait défaut pour le fonctionnement stoechiométrique de l'étape de conversion du CO (4) conformément à l'équation réactionnelle

$$CO + H_2O \rightarrow CO_2 + H_2,$$

en augmentant l'alimentation de gaz naturel à titre de substance de mise en oeuvre dans le dispositif de reformage primaire (2).

Fig. 1

EP 0 816 290 B1

13

Fig. 2

EP 0 816 290 B1